# EUROPEAN PATENT SPECIFICATION

(11) **EP 0 439 856 B1**
(45) Date of publication and mention of the grant of the patent: **25.08.1993**
(21) Application number: 90203423.0
(22) Date of filing: 18.12.1990
(51) Int. Cl.: C01B 31/08

(54) **Process for the regeneration of active carbon**
Verfahren zur Regenerierung von Aktivkohle
Procédé de régéneration de charbon actif

(30) Priority: 02.02.1990 IT 1924190
(43) Date of publication of application: 07.08.1991
(73) Proprietor: ENIRICERCHE S.p.A., 20121 Milano (IT)
(72) Inventor: Menicagli, Roberto, I-20060 Mediglia-Milan (IT); Miano, Fausto, I-94100 Enna (IT); Borgarello, Enrico, I-10151 Torino (IT)
(74) Representative: Fusina, Gerolamo

(56) References cited:
- EP-A- 0 325 133
- FR-A- 2 179 129
- GB-A- 2 021 548
- WORLD PATENTS INDEX (LATEST), week 42, accession no. 86-275504 [42], Derwent Publications Ltd, London, GB; & JP-A-61 200 837 (EBARA INFILCO K.K.) 05-09-1986

## Description

A method is described for the purification of active carbon onto which one or more organic substances may be adsorbed. This method consists in subjecting such carbon, in an aqueous suspension, to light radiation of a wave length shorter than 500nm, in the presence of a semiconductor as a catalyst.

Active carbon is used as a decolourant and purifier in, for example, the organic acids, glycerine, glucose, sugar, wine and vegetable oil industries. In many cases, in addition to the adsorption of colouring substances, other useful effects are achieved such as the adsorption of suspended colloids, deodorization and disinfection. One particular use of active carbon is in the purification of water polluted by organic material deriving from industrial waste, urban waste, chemical treatments for agriculture, etc. From this polluted water, drinking water may be obtained by filtration through active carbon.

After use, the active carbon is regenerated. There are various regeneration methods such as thermal regeneration, steam stripping or washing with acid or alkaline solutions or with organic solvent, depending on the nature of the polluting organic substances adsorbed.

The use of the first method is limited by various problems: on the one hand the high cost of combustion, on the other the release of toxic substances deriving from the partial oxidation of the pollutants, in the form of particles or condensates. As regards the other regeneration methods, they essentially consist in transferring the pollutants from the carbon to an aqueous or organic solution. These solutions in turn obviously require further purification treatment which, in the case of water, enables the latter to be discharged and in the case of organic solvent, enables the latter to be recovered and reused.

We have now discovered a method which makes it possible to regenerate active carbon onto which one or more organic substances may be adsorbed by means of a process which, in a single stage, results in the complete degradation of the organic pollutants.

This method consists in subjecting the said carbon, in aqueous suspension, to light radiation of a wave length shorter than 500nm, in the presence of a semiconductor as a catalyst.

The purification of polluted water by means of photocatalytic processes is already known (D. Ollis, Environ. Sci. Technol., Vol. 19, No. 6, 1985). Such purification is achieved by subjecting the polluted water to a photodegrading process in the presence of a semiconductor as a catalyst. In these conditions the semiconductor absorbs radiation with the consequent promotion of an electron to the conduction band and the formation of an electron void in the valence band. Both these types of reactants may migrate to the surface of the catalyst where they are capable of causing redox reactions in the polluting substances as they are adsorbed thereon. In particular, these substances may be converted into other less toxic substances or be completely mineralized, i.e. converted into carbon dioxide and water.

We have now surprisingly discovered that it is possible to regenerate by means of a photocatalytic process an active carbon onto which polluting organic substances are adsorbed. The object of the present invention is therefore a method for the regeneration of active carbon which consists in irradiating such carbon, in aqueous suspension, with radiation of a wave length shorter than 500nm, in the presence of a semiconductor as a catalyst.

The prior art makes no mention of the fact that it is possible to degrade polluting substances adsorbed onto active carbon by means of heterogeneous photocatalysis, indeed such behaviour is totally unexpected. The distribution constants of most pollutants are in fact such as to make their concentration in the reaction water very low, and one could therefore have expected reaction speeds too slow to be exploited industrially. Furthermore the carbon absorbs part of the light radiation limiting the penetration of the latter into the reaction mixture.

The process covered by our invention is performed by placing the active carbon to be regenerated in an aqueous suspension in a reactor and then subjecting it to irradiation by a lamp which emits radiation of a wave length shorter than 500nm, in the presence of a semiconductor as a catalyst.

The semiconductors that can be used as catalysts in this process are titanium dioxide, zinc oxide and iron oxide. These catalysts are dispersed in water and may be in the form of colloids, powder, microspheres, or appropriately supported.

In the first case the semiconductors may be for example in particles of a particle size of between 0.01 and 1 µm and the second case in particles of a particle size of between 1 and 100 µm.

The microspheres may for example have a diameter of between 0.1 and 5.0mm and be prepared as described in GB 2.112.764

In the case of supported catalysts, the support used may for example be glass.

Catalysts dispersed in water in colloidal and powder form are used in a concentration of between 0.1 and 10g/l. Catalysts in the form of microspheres or supported are used in a concentration of between 10 and 100g/l.

The lamps that may be used are those that emit radiation of a wave length shorter than 500nm, preferably between 240 and 450nm. Such lamps may be high- or low-pressure xenon or mercury vapour lamps.

During the process air or oxygen may be blown into the reactor.

The process may be performed both continuously and discontinuously.

The reactors that may be used in the present invention are those already described for photocatalytic processes in aqueous solution: they may for example be of the "immersion" type, i.e. in which in a conventional chemical reactor, a lamp is immersed through the lid into the reaction mixture or, for example, the annular type, i.e. comprising two coaxial cylinders which delimit the reaction area with the lamp being placed on the axis of symmetry. One type of reactor that may be used is for example that described in EPA 0401884. When the process is completed the carbon is recovered from the reaction mixture and the remaining aqueous suspension of catalyst is again supplied to the reactor. The carbon may be recovered, for example, by gravimetric separation or by flotation.

By using the process covered by the present invention active carbon of different natures and compositions may be purified: it is thus possible to regenerate active carbons of both animal and vegetable origin. The quantity of carbon that may be present in the reaction environment is between 0.1 and 20g/l, preferably between 1 and 10g/l.

Organic pollutants, depending on their nature, may be converted into less toxic compounds or be completely mineralized.

The following examples have the sole aim of better illustrating the process covered by the present invention and in no case should be interpreted as a limitation of its aims.

### Example 1

A sample of spent active carbon is prepared by treating 400mg of active carbon and 200mg of TiO₂ with four 50ml-portions of an aqueous solution of phenol having a concentration of 2000mg/l.

With the first treatment the carbon sample absorbs 39.5mg of phenol, with the second treatment 38mg and with the third 16, whereas on the fourth treatment, since only 4mg are absorbed, the sample is regarded as saturated. In total 97mg of phenol have been absorbed, corresponding to 242mg of phenol per gram of active carbon.

The mixture of spent active carbon and TiO₂ thus prepared is suspended in 200ml of water.

In the suspension, kept under agitation, a 40W mercury-vapour low-pressure lamp is immersed and then irradiation continues for 18 hours.

On completion the suspension is filtered so as to separate the carbon and catalyst from the water. In the water 21.6mg of non-degraded phenol is found. The carbon is then again treated with four 50ml-portions of an aqueous solution of phenol having a concentration of 2000mg/l, in order to assess the extent of its regeneration.

On completion of this treatment the carbon sample has absorbed 64mg of phenol. Thus in total (64-21.6) mg = 42.4mg of phenol have been degraded photocatalytically, corresponding to a 44% regeneration.

### Example 2

Example 1 is repeated under the same conditions, but in the absence of TiO₂. On completion of the photodegrading treatment the sample of active carbon is recovered by filtration and treated with 50ml of an aqueous solution containing 2000mg/l of phenol. From this solution the carbon sample is capable of absorbing only 0.015mg of phenol thus proving that, in the absence of a semiconductor as a catalyst, active carbon is not regenerated.

### Example 3

500mg of active carbon are mixed with 100mg of TiO₂ and then treated with 100ml of a solution containing 500mg/l of p-chlorophenol, for 30' under agitation. The treatment is repeated twice more with two fresh solutions the same as the previous one. On completion of the three treatments, the sample of active carbon has absorbed 66mg of p-chlorophenol. The spent carbon thus obtained is suspended in 120ml of water and subjected for 6 hours to irradiation by means of a 40W low-pressure mercury-vapour lamp. The carbon is then prepared by filtration. The aqueous floating substance contains 7mg of p-chlorophenol. The carbon sample regenerated by photodegradation is subjected to further treatment with two 100ml-portions of an aqueous solution containing 500mg/l of p-chlorophenol. On completion of the treatment the carbon sample has absorbed 17mg of p-chlorophenol. In total therefore the photocatalytic treatment has enabled 10mg of p-chlorophenol to be degraded, corresponding to a regeneration for the sample of active carbon of 15%.

### Example 4

400mg of active carbon are mixed with 200mg of TiO₂ and then treated with 100ml of a solution containing 500mg/l of p-chlorophenol, for 30' under agitation. The treatment is repeated twice more with two fresh solutions the same as the previous one. On completion of the three treatments, the sample of active carbon has absorbed 48.6mg of p-chlorophenol. The spent carbon thus obtained is suspended in 200ml of water and subjected for 18 hours to irradiation by means of a 40W low-pressure mercury-vapour lamp. The carbon is then separated by filtration. The aqueous floating substance contains 7.6mg of p-chlorophenol. The carbon sample regenerated by photodegradation is subjected to further treatment with two 100ml-portions of an aqueous solution containing 500mg/l of p-chlorophenol. On completion of the treatment the carbon sample has absorbed 41mg of p-chlorophenol. In total therefore the photocatalytic treatment has enabled (41.o-7.6) = 33.4mg of p-chlorophenol to be degraded, corresponding to a regeneration for the sample of active carbon of 69%.

## Claims

1. A method for the regeneration of active carbon onto which one or more organic substances are adsorbed which consists in suspending such carbon in water and subjecting it to radiation of a wave length shorter than 500nm, in the presence of a semiconductor as a catalyst.

2. A method according to Claim 1 wherein the radiation is of a wave length of between 450 and 240nm.

3. A method according to Claims 1 and 2 wherein the radiation is emitted by a high- or low-pressure xenon- or mercury-vapour arc lamp.

4. A method according to Claim 1 wherein the semiconductor is chosen between titanium dioxide, zinc oxide or iron oxide.

5. A method according to Claim 1 wherein the semiconductor is titanium dioxide.

6. A method according to Claim 1 wherein the semiconductor is dispersed in water in a colloidal or powder form.

7. A method according to Claim 6 wherein the semiconductor is used in a concentration of between 0.1 and 10g/l.

8. A method according to Claim 1 wherein the semiconductor is dispersed in water in the form of microspheres or supported.

9. A method according to Claim 8 wherein the semiconductor is used in a concentration of between 0.1 and 100g/l.

10. A method according to Claim 6 wherein the semiconductor is in a colloidal form in particles of particle size of between 0.01 and 1µm.

11. A method according to Claim 6 wherein the semiconductor is in the form of a powder in particles of a particle size greater than 1µm and less than 100µm.

12. A method according to Claim 8 wherein the semiconductor is in the form of microspheres of a diameter of between 0.1 and 5.0mm.

13. A method according to claim 8, wherein the microspheres of semiconductor are obtained by:
a) preparing a viscous alcoholic solution of an organometallic compound of titanium;
b) optionally thickening the solution by adding an organic polymer thereto;
c) gelling the solution by alkaline neutralization in an anhydrous environment or an environment having a controlled water content, to obtain a ion-exchange gel based on titanium, zinc or iron, in the geometrical configuration of microspheres.

14. A method according to claim 8, wherein the semiconductor is supported on glass.

15. A method according to claim 1, wherein the concentration af active carbon is between 0.1 g/l and 20 g/l.

16. A method according to claim 15, wherein the concentration of active carbon is between 1 g/l and 10 g/l.

17. A method according to claim 1, wherein the radiation is of a wavelength of between 380 nm and 240 nm and the semiconductor is titanium dioxide.

18. A method according to claim 1, wherein, during the treatment, air or oxygen is blown into the aqueous suspension.

19. A method according to claim 1, wherein it is performed continuously in an annular type reactor.

20. A method according to claim 1, wherein it is performed continuously in a reactor consisting of a hollow space of not more than 5 cm of thickness, whose inner wall is the wall of a lamp emitting at least one fraction of its radiations with a wavelengths shorter than 400 nm.

## Patentansprüche

1. Verfahren zum Regenerieren von Aktivkohle, auf der eine oder mehrere organische Substanzen adsorbiert sind, bei welchem diese Kohle in Wasser suspendiert und einer Strahlung mit einer Wellenlänge von kleiner als 500 nm in Anwesenheit eines Halbleiters als Katalysator unterworfen wird.

2. Verfahren nach Anspruch 1, bei welchem die Strahlung eine Wellenlänge zwischen 450 und 240 nm hat.

3. Verfahren nach Anspruch 1 oder 2, bei welchem die Strahlung von einer Hoch- oder Niederdruck- Xenon- oder Quecksilberdampf-Bogenlampe ausgesandt wird.

4. Verfahren nach Anspruch 1, bei welchem der Halbleiter unter Titandioxid, Zinkoxid oder Eisenoxid gewählt wird.

5. Verfahren nach Anspruch 1, bei welchem der Halbleiter Titandioxid ist.

6. Verfahren nach Anspruch 1, bei welchem der Halbleiter in Wasser in kolloidaler Form oder Pulverform dispergiert ist.

7. Verfahren nach Anspruch 6, bei welchem der Halbleiter in einer Konzentration zwischen 0,1 und 10 g/l verwendet wird.

8. Verfahren nach Anspruch 1, bei welchem der Halbleiter in Wasser in Form von Mikrokügelchen dispergiert ist oder sich auf einem Träger befindet.

9. Verfahren nach Anspruch 8, bei welchem der Halbleiter in eine Konzentration zwischen 0,1 und 100 g/l verwendet wird.

10. Verfahren nach Anspruch 6, bei welchem der Halbleiter in einer kolloidalen Form in Partikeln mit einer Partikelgröße zwischen 0,01 und 1 µm vorliegt.

11. Verfahren nach Anspruch 6, bei welchem der Halbleiter in Form eines Pulvers in Partikeln mit einer Partikelgröße größer als 1 µm und kleiner als 100 µm vorliegt.

12. Verfahren nach Anspruch 8, bei welchem der Halbleiter in Form von Mikrokügelchen mit einem Durchmesser zwischen 0,1 und 5,0 mm vorliegt.

13. Verfahren nach Anspruch 8, bei welchem die Mikrokügelchen aus Halbleiter erhalten werden durch:
a) Herstellen einer viskosen alkoholischen Lösung einer organometallischen Titanverbindung;
b) optionales Verdicken der Lösung durch Beigabe eines organischen Polymers;
c) Gelieren der Lösung durch alkalische Neutralisation in einer anhydriden Umgebung oder einer Umgebung mit einem kontrollierten Wassergehalt, um ein ionenaustauschendes Gel auf Basis von Titan, Zink oder Eisen in der geometrischen Konfiguration von Mikrokügelchen zu erhalten.

14. Verfahren nach Anspruch 8, bei welchem sich der Halbleiter auf einem Glasträger befindet.

15. Verfahren nach Anspruch 1, bei welchem die Konzentration der Aktivkohle zwischen 0,1 g/l und 20 g/l liegt.

16. Verfahren nach Anspruch 15, bei welchem die Konzentration der Aktivkohle zwischen 1 g/l und 10 g/l liegt.

17. Verfahren nach Anspruch 1, bei welchem die Strahlung eine Wellenlänge zwischen 380 nm und 240 nm hat und der Halbleiter Titandioxid ist.

18. Verfahren nach Anspruch 1, bei welchem während der Behandlung Luft oder Sauerstoff in die wässrige Lösung eingeblasen wird.

19. Verfahren nach Anspruch 1, welches kontinuierlich in einem Reaktor vom Ringtyp durchgeführt wird.

20. Verfahren nach Anspruch 1, welches kontinuierlich in einem Reaktor durchgeführt wird, der aus einem Hohlraum von nicht mehr als 5 cm Dicke besteht, dessen Innenwand die Wand einer Lampe ist, welche zumindest einen Bruchteil ihrer Strahlung mit Wellenlängen von kürzer als 400 nm aussendet.

## Revendications

1. Procédé de régénération de charbon actif sur lequel sont absorbées une ou plusieurs substances organiques, qui consiste à mettre ledit charbon en suspension dans de l'eau et à le soumettre à l'action d'un rayonnement ayant une longueur d'onde inférieure à 500 nm, en présence d'un semi-conducteur comme catalyseur.

2. Procédé selon la revendication 1, dans lequel le rayonnement a une longueur d'onde comprise entre 450 et 240 nm.

3. Procédé selon la revendication 1 ou 2, dans lequel le rayonnement est émis par une lampe à arc, à vapeur de mercure ou à xénon, à basse pression ou à pression élevée.

4. Procédé selon la revendication 1, dans lequel le semi-conducteur est choisi parmi le dioxyde de titane, l'oxyde de zinc et l'oxyde de fer.

5. Procédé selon la revendication 1, dans lequel le semi-conducteur est du dioxyde de titane.

6. Procédé selon la revendication 1, dans lequel le semi-conducteur est dispersé dans de l'eau, sous une forme colloïdal ou sous la forme d'une poudre.

7. Procédé selon la revendication 6, dans lequel on utilise le semi-conducteur à une concentration comprise entre 0,1 et 10 g/l.

8. Procédé selon la revendication 1, dans lequel le semi-conducteur est dispersé dans l'eau sous la forme de microsphères ou est fixé sur un support.

9. Procédé selon la revendication 8, dans lequel on utilise le semi-conducteur à une concentration comprise entre 0,1 et 100 g/l.

10. Procédé selon la revendication 6, dans lequel le semi-conducteur est sous la forme de particules colloïdales ayant une taille de particule comprise entre 0,01 et 1 µm.

11. Procédé selon la revendication 6, dans lequel le semi-conducteur est sous la forme d'une poudre constituée de particules dont la taille de particule est supérieure à 1 µm et inférieure à 100 µm.

12. Procédé selon la revendication 8, dans lequel le semi-conducteur est sous la forme de microsphères ayant un diamètre compris entre 0,1 et 5,0 mm.

13. Procédé selon la revendication 8, dans lequel les microsphères de semi-conducteur sont obtenues par:
a) préparation d'une solution alcoolique visqueuse d'un dérivé organo-métallique du titane,
b) éventuellement épaississement de la solution par addition d'un polymère organique à la solution,
c) gélification de la solution par neutralisation alcaline, dans un environnement anhydre ou dans un environnement ayant une teneur en eau réglée, afin d'obtenir un gel échangeur d'ions, à base de titane, de zinc ou de fer, ayant la configuration géométrique de microsphères.

14. Procédé selon la revendication 8, dans lequel le semi-conducteur est fixé sur un support de verre.

15. Procédé selon la revendication 1, dans lequel la concentration de charbon actif est comprise entre 0,1 g/l et 20 g/l.

16. Procédé selon la revendication 15, dans lequel la concentration de charbon actif est comprise entre 1 g/l et 10 g/l.

17. Procédé selon la revendication 1, dans lequel le rayonnement a une longueur d'onde comprise entre 380 nm et 240 nm, et le semi-conducteur est du dioxyde de titane.

18. Procédé selon la revendication 1, dans lequel, durant le traitement, on fait barboter de l'air ou de l'oxygène dans la suspension aqueuse.

19. Procédé selon la revendication 1, qui est réalisé en continu dans un réacteur de type annulaire.

20. Procédé selon la revendication 1, qui est réalisé en continu dans un réacteur présentant un espace creux d'épaisseur ne dépassant pas 5 cm, dont la paroi interne est la paroi d'une lampe émettant un rayonnement dont au moins une partie a une longueur d'onde inférieure à 400 nm.
